## Europäisches Patentamt
## European Patent Office
## Office européen des brevets

(11) Veröffentlichungsnummer: **0 126 198**
**B1**

(12) **EUROPÄISCHE PATENTSCHRIFT**

(45) Veröffentlichungstag der Patentschrift:
**13.08.86**

(21) Anmeldenummer: **83890087.6**

(22) Anmeldetag: **19.05.83**

(51) Int. Cl.⁴: **B 23 C 3/06**

(54) Fräsmaschine.

(43) Veröffentlichungstag der Anmeldung:
**28.11.84 Patentblatt 84/48**

(45) Bekanntmachung des Hinweises auf die Patenterteilung:
**13.08.86 Patentblatt 86/33**

(84) Benannte Vertragsstaaten:
**AT DE GB IT**

(56) Entgegenhaltungen:
**DE-A-2 936 251**
**DE-A-3 039 986**
**DE-B-2 209 622**

(73) Patentinhaber: **GFM Gesellschaft für Fertigungstechnik und Maschinenbau Gesellschaft m.b.H., Ennserstrasse 14, A-4403 Steyr (AT)**

(72) Erfinder: **Blaimschein, Gottfried, Dipl. Ing., Puchstrasse 2, A-4400 Steyr (AT)**
Erfinder: **Marzy, Otto, Fichtenweg 6, A-4400 Steyr/St. Ulrich (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

EP 0 126 198 B1

LIBER, STOCKHOLM 1986

## Beschreibung

Die Erfindung betrifft eine Fräsmaschine mit einem Maschinenbett, zwei Spannstöcken und wenigstens einem Frässchlitten, der auf normal zur Maschinenachse verlaufenden Führungsschienen sitzt und ein ringförmiges, innenschneidendes Fräswerkzeug aufnimmt. Solch eine Maschine ist z.B. aus der DE-B-2 209 622 bekannt.

Die Entwicklung der Fräsmaschinen geht durch den Einsatz von Fräswerkzeugen, die mit beschichteten Hartmetall-Schneidplatten und Keramik-Wendeplatten bestückt sind, in Richtung steigender Schnittgeschwindigkeiten, um die Fräszeiten zu reduzieren, womit der Anteil der Nebenzeiten an der Gesamtbearbeitungszeit eines Werkstückes immer größer wird. Bei Fräsmaschinen mit innenschneidenden Werkzeugen stellt nun der Werkzeugwechsel einen sehr zeitraubenden, arbeitsintensiven Vorgang dar, für den bei Fräsmaschinen mit zwei Frässchlitten und zusätzlicher Lünette, wie sie gerade zur Serienfertigung von Kurbelwellen u. dgl. verwendet werden, besonders ungünstige Bedingungen gegeben sind. Zum Werkzeugwechsel liegt nämlich bisher das Fräswerkzeug koaxial zur Maschinenachse, so daß nur sehr wenig Platz für den Aus- und Einbau des Fräswerkzeuges verbleibt und wegen der Unzugänglichkeit außerdem spezielle Werkzeugwechseleinrichtungen vorbereitet sein müssen. Ein Werkzeugwechsel ist daher nicht nur mühsam und aufwendig, sondern vor allem auch langwierig und verlängert die ohnehin so unerwünschten Nebenzeiten beträchtlich.

Der Erfindung liegt daher die Aufgabe zugrunde, eine Verbesserung dieser Verhältnisse zu erreichen und eine Fräsmaschine der eingangs geschilderten Art zu schaffen, die ein vergleichsweise schnelles, problemloses Werkzeugwechseln erlaubt.

Die Erfindung löst diese Aufgabe dadurch, daß der Frässchlitten aus einer Mittenstellung, in der das Fräswerkzeug koaxial zur Maschinenachse liegt, den Führungsschienen entlang um ein die Weite der radialen Positionier- und Vorschubbewegung des Fräswerkzeuges übersteigendes Maß in eine außermittige Werkzeugwechselstellung verfahrbar ist, in der sich das Fräswerkzeug, in Maschinenachsrichtung gesehen, zumindest großteils außerhalb der Spannstockkonturen befindet. Durch die Möglichkeit, den Frässchlitten aus der Mitte der Maschine herausfahren zu können, und zwar über das für die maximale Vorschubbewegung zur Werkstückbearbeitung erforderliche Maß hinaus, d.i. meist mindestens 60 % des Fräswerkzeug-Innendurchmessers weit, läßt sich das Fräswerkzeug in eine Werkzeugwechselstellung bringen, die es vollkommen frei zugänglich macht und unbeschränkten Platz für den Einsatz beliebiger Wechseleinrichtungen bietet. Die günstigen Platzverhältnisse und die Zugänglichkeit des Werkzeuges erlauben in kürzester Zeit ein rationelles Werkzeugwechseln, und das Werkzeugwechseln läßt sich sogar schwierigkeitslos automatisieren. Dabei sind zur Verwirklichung dieses mit kürzesten Nebenzeiten verbundenen Werkzeugwechselns nur wenige Änderungen der üblichen Fräsmaschinenkonzeption nötig, da mit geringem Steuerungs- und Konstruktionsmehraugwand für die erforderliche Verlängerung der Frässchlittenquerbewegung gesorgt werden kann, die noch dazu je nach gegebener Maschinenkonzeption in jeder zur Maschinenachse normalen Richtung möglich ist.

Eine weitere Vereinfachung des Werkzeugwechselns ergibt sich bei Fräsmaschinen mit zwei Frässchlitten, wenn erfindungsgemäß die Fräswerkzeuge beider Frässchlitten jeweils in Richtung zum benachbarten Spannstock abnehmbar montiert sind. Dadurch kann die Werkzeugwechseleinrichtung spannstockseitig herangeführt und angesetzt werden, was ein gleichzeitiges Wechseln der Werkzeuge ohne gegenseitige Behinderung gewährleistet.

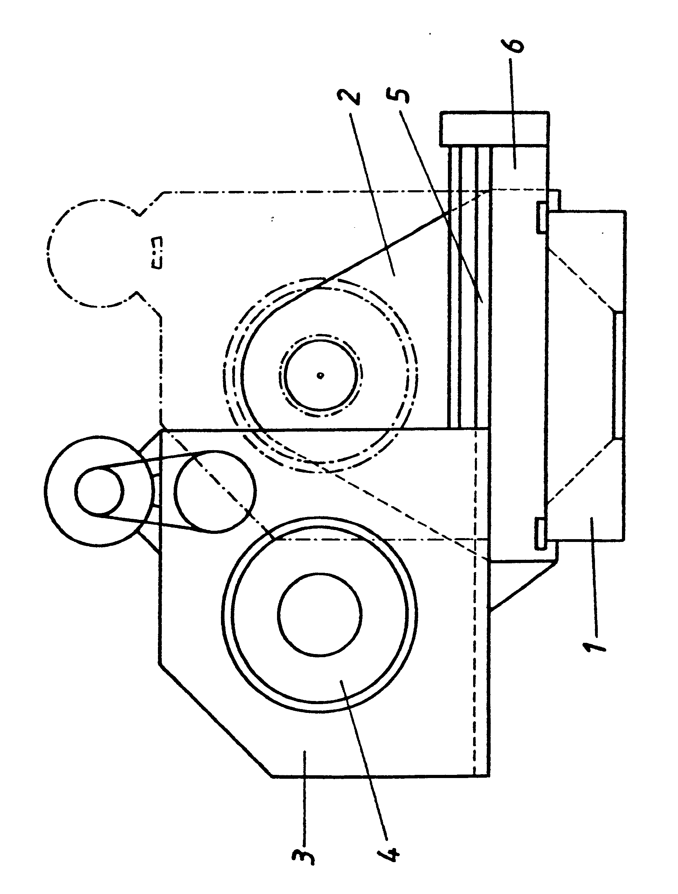

Die Zeichnung zeigt ein Ausführungsbeispiel einer erfindungsgemäßen Fräsmaschine in schematischer Stirnansicht mit weggelassenem vorderen Spannstock.

Ein Maschinenbett 1 mit seinen beiden Spannstöcken 2 trägt einen Frässchlitten 3, der ein ringförmiges, innenschneidendes Fräswerkzeug 4 aufnimmt. Der Frässchlitten 3 sitzt verfahrbar in Führungsschienen 5, die normal zur von den Einspannzentren der Spannstöcke bestimmten Maschinenachse verlaufen und auf einem Längsschlitten 6 verlegt sind.

Um nun möglichst rasch und bei guter Zugänglichkeit die Fräswerkzeuge 4 wechseln zu können, läßt sich der Frässchlitten 3 aus einer Mittenstellung mit koaxial zur Maschinenachse liegendem Fräswerkzeug (strichpunktierte Darstellung) seinen Führungsschienen 5 entlang bis in eine seitliche Werkzeugwechselstellung (Darstellung mit durchgehenden Strichen) verfahren, in der das Fräswerkzeug 4 außerhalb der Spannstockkonturen liegt und somit ohne Beschränkung vollkommen frei zugänglich ist. Der Frässchlitten 3 kann dabei auch über das Führungsschienenende hinausragen, um eine schmälere Bauweise einhalten zu können.

Durch diese Möglichkeit der außermittigen Werkzeugwechselstellung werden eine wesentliche Verkürzung und Vereinfachung des Werkzeugwechselns erreicht, und es können ohne Rücksicht auf beschränkte Platzverhältnisse zweckmäßige und vor allem auch automatisierte Werkzeugwechseleinrichtungen eingesetzt werden. Die Maßnahme des außermittigen Werkzeugwechselns macht sich insbesondere bei Mehrschlittenmaschinen und bei Verwendung zusätzlicher Lünetten, also bei Maschinen mit eng begrenztem Raumangebot für ein mittiges Werkzeugwechseln bemerkbar, wobei günstigerweise bei Mehrschlittenmaschinen die Fräswerkzeuge in Richtung zu den Spannstöcken auszubauen sind, damit sich die Frässchlitten nicht gegenseitig im Wege stehen. Da es lediglich darauf ankommt, daß die Fräswerkzeuge 4 zum Wechseln frei zugänglich gemacht werden, ist grundsätzlich die Richtung der Außermittigkeit für die Werkzeugwechselstellung ohne Bedeutung, womit sich diese Werkzeugwechselstellung des Frässchlittens bei jeder Fräsmaschine erreichen und den Gegebenheiten dieser Maschine gemäß geeignet wählen läßt.

**Patentansprüche**

1. Fräsmaschine mit einem Maschinenbett (1), zwei Spannstöcken (2) und wenigstens einem Frässchlitten (3), der auf normal zur Maschinenachse verlaufenden Führungsschienen (5) sitzt und ein ringförmiges, innenschneidendes Fräswerkzeug (4) aufnimmt, dadurch gekennzeichnet, daß der Frässchlitten (3) aus einer Mittenstellung, in der das Fräswerkzeug (4) koaxial zur Maschinenachse liegt, den Führungsschienen (5) entlang um ein die Weite der radialen Positionier- und Vorschubbewegung des Fräswerkzeuges (4) übersteigendes Maß in eine außermittige Werkzeugwechselstellung verfahrbar ist, in der sich das Fräswerkzeug (4), in Maschinenachsrichtung gesehen, zumindest großteils außerhalb der Spannstockkonturen befindet.

2. Fräsmaschine nach Anspruch 1 mit zwei Frässchlitten, dadurch gekennzeichnet, daß die Fräswerkzeuge (4) beider Frässchlitten (3) jeweils in Richtung zum benachbarten Spannstock abnehmbar montiert sind.

**Claims**

1. A milling machine comprising a machine bed (1), two clamping structures (2) and at least one milling carriage (3), which is mounted on guide rails (5), which extend normally to the machine axis, which carriage receives an internally cutting, annular milling cutter (4), characterized in that the milling carriage (3) is movable along the guide rails (5) from a central position, in which the milling cutter (4) is coaxial to the machine axis, by a distance in excess of tbe width of the radial positioning and feed movement of the milling cutter (4) to an eccentric tool-changing position, in which a major portion of the milling cutter (4), viewed in the direction of the machine axis, is disposed outside the contours of the clanpin structures.

2. A milling machine according to claim 1 comprising two milling carriages, characterized in that the milling cutter (4) of each milling carriage (3) is mounted to be removable in the direction toward the adjacent clamping structure.

**Revendications**

1. Fraiseuse avec un banc (1) de machine, deux blocs (2) de serrage et au moins un chariot (3) de fraisage placé sur des rails (5) de guidage s'étendant à la normale de l'axe de la machine et servant de logement à un outil (4) de fraisage annulaire pour coupe intérieure, caractérisée par le fait que le chariot (3) de fraisage peut être déplacé à partir d'une position centrée dans laquelle l'outil (4) de fraisage est orienté dans le sens coaxial à l'axe de la machine, le long des rails (5) de guidage à concurrence d'un parcours excédant l'amplitude du mouvement radial de positionnement et d'avance de l'outil (4) de fraisage en une position excentrée de changement d'outil dans laquelle l'outil (4) de fraisage se trouve, en regardant dans le sens de l'axe de la machine, au moins en grande partie à l'extérieur du profil extérieur des blocs de serrage.

2. Fraiseuse suivant la revendication 1 avec deux chariots de fraisage, caractérisée par le fait que les outils (4) de fraisage des deux chariots (3) de fraisage sont montés de manière amovible chacun dans le sens du bloc de serrage avoisinant.

0 126 198